# EUROPEAN PATENT APPLICATION

(11) **EP 2 143 592 A1**
(43) Date of publication of application: **13.01.2010**
(21) Application number: 08160272.4
(22) Date of filing: 11.07.2008
(51) Int. Cl.: B60R 19/56, B60R 19/38, B60P 1/28, B60P 1/04

(54) **Rear bumber for a truck with a tipper body**

(71) Applicant: Hyva International B.V., 2400 AH Alphen aan de Rijn (NL)
(72) Inventor: Wassenaar, Hendrik, 2401 DM, ALPHEN a/d RIJN (NL)
(74) Representative: Uittenbogaart, Gustaaf Adolf

(57) **Abstract**

The invention concerns a truck for transporting bulk loads comprising a chassis (2), a tipper body (4,16) supported by the chassis and at the end of the tipper body a tilt shaft (5) to connect the tipper body to the sub frame wherein the tipper body extends with a overhang (6) rearwards of the tilt shaft and a bumper (8) at the rear of the chassis under the tipper body.
In accordance with the invention, the bumper comprises a bumper frame (14,15), a hinge (12) connecting the bumper frame to the tipper body and a adjustment means for extending the distance between the bumper and the hinge.

## Description

The invention concerns a truck in according to the preamble of claim 1. The disadvantage of the known truck is that the bumper is not located in the same aft plane as the rear of the overhang of the tipper body so that in a collision an upcoming vehicle can come partly under the overhang, which can lead to additional or undesired (personal) damage. In order to overcome this disadvantage the truck is according to claim 1. In this way the bumper can be located under the rear end of the overhang when the truck is driving and moved against the underside of the overhang when the truck is unloaded by tilting the tipper body.

In accordance with an embodiment the truck is according to claim 2. In this way it is easy to adapt the bumper frame for use during driving or during tilting the tipper body.

In accordance with an embodiment the truck is according to claim 3. This makes a compact design of the hinge possible.

In accordance with an embodiment the truck is according to claim 4. In this way the bumper is positioned in a quick way immediately before starting unloading.

The invention also concerns a method according to claim 4 or 5. In this way unloading is easy without the risk that the bumper damages the tipper body.

Hereafter the invention is explained by describing an embodiment with the aid of a drawing. In the drawing
Figure 1 shows in side view a truck for transporting bulk load in a tipper body,
Figure 2 shows the truck of figure 1 with the tipper body in tilted position,
Figure 3 shows a perspective schematic view of the bumper of the truck of figure 1,
Figure 4 shows a perspective schematic view of the bumper of figure 3
Figure 5 shows in side view the bumper and the tipper body ready for driving,
Figure 6 shows in side view the bumper in stored position and the tipper body ready for tilting, and
Figure 7 shows in side view with the tipper body in tilted position.

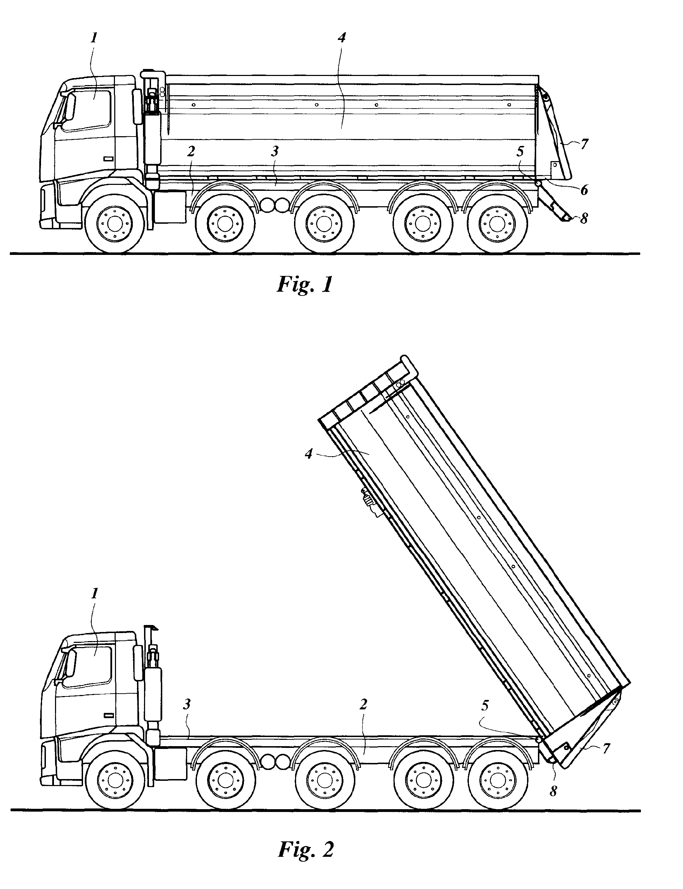

Figure 1 shows a truck with a chassis 2 and a cabin 1. The chassis 2 supports a sub frame 3. The subframe 3 supports a tipper body 4, a hinge 5 couples the tipper body 4 to the sub frame 3. At the back of the truck, a board 7 closes the tipper body 4. The tipper body 4 has an overhang 6 at the back of the hinge 5 so that it extends a distance backwards from the chassis 2. As figure 2 shows when tilting the overhang 6 lets the end of the tipper body 4 and the bottom of the board 7 lower towards the road so that emptying of the tipper body 4 is more controlled. This is an advantage when the load in the tipper body must be unloaded in a machine near the road such as during asphalting the road. In the shown embodiment, there is a sub frame 3 on the chassis 2, in other embodiment the tipper body 4 is coupled to the chassis 2 directly.

A bumper 8 extends behind the chassis 2 at a low level under the overhang 6 and for instance approximately 0,5 m above the road so that during driving the bumper 8 protects traffic approaching the truck from behind against colliding with the overhang 6. In its lower position, it is not possible to tip load into an asphalt machine due to the construction of these machines or to tip at other locations which have limited access. Therefore, before tilting the tipper body 4 the bumper 8 retracts upwards against the underside of the overhang 6 of the tipper body 4.

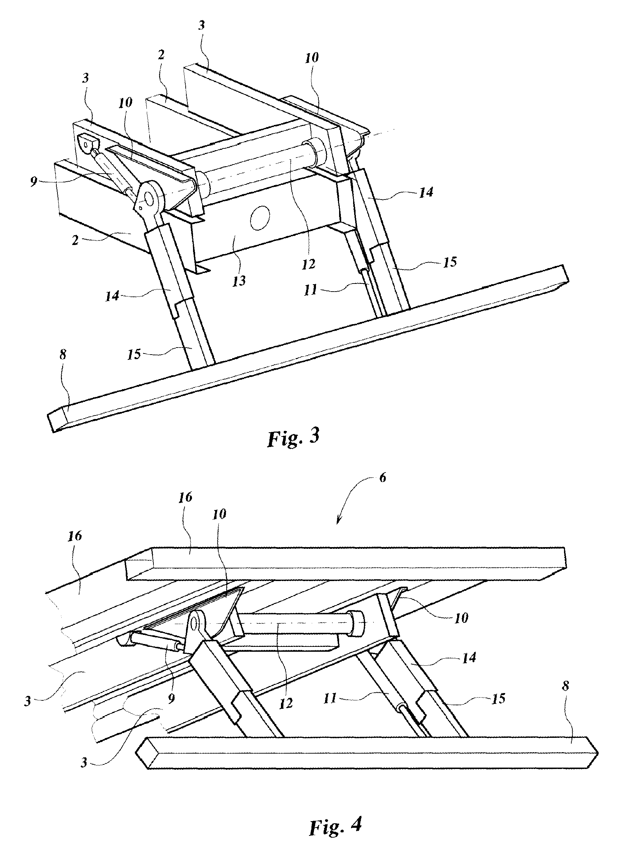

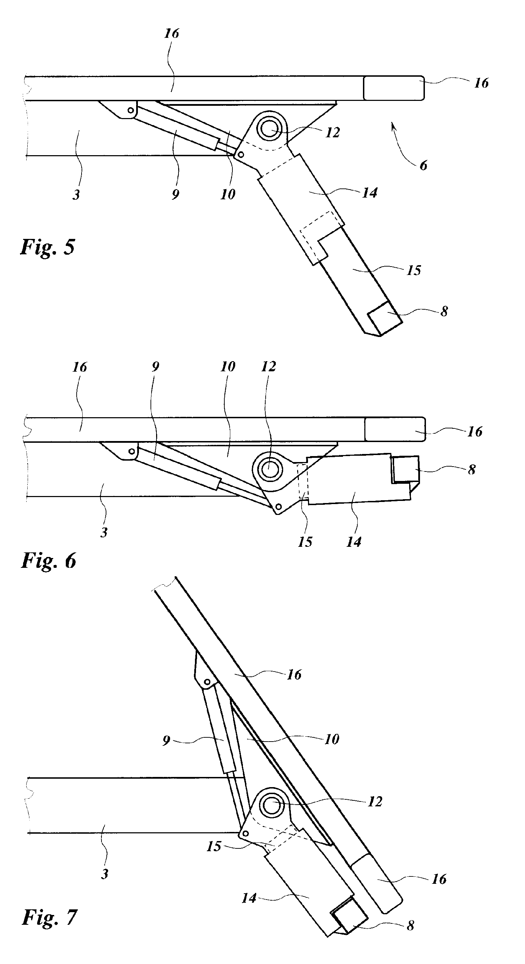

Figure 3 and 4 show the construction of the bumper 8 and figures 5, 6 and 7 show how the bumper 8 retracts against the underside of the tipper body 4. The bumper 8 has two support plates 15 and each support plate 15 can slide in a support tube 14 when actuated by a cylinder 11. The support tubes 14 can rotate around a rotation axis 12 relative to coupling plates 10 when actuated by a cylinder 9. The coupling plates 10 couple the support tube 14 to a tipper body 16 that is part of the tipper body 4. In the shown embodiment, the rotation axis 12 of the tipper body 16 is the same as the rotation axis of hinge 5 so that during tilting of the tipper body 4 the position of bumper 8 does not change relative to the tipper body 4.

The support plates 15 and support tubes 14 are more or less in line with the chassis beams and/or tilt frame beams so that the support construction of the bumper 8 does not obscure lights or markings located at the back of the truck and so that forces on the bumper 8 are guided directly into the chassis 2.

As can be seen in figure 5 in its active position, that is during driving of the truck, the bumper 8 is more or less perpendicular under the most aft part of the tipper body 16 so that upcoming traffic would collide simultaneously against the bumper 8 and the tipper body 16. The forces of a collision against the bumper 8 can be considerable and the construction of the bumper 8 must be able to withstand these forces when the bumper 8 is in the position as shown in figure 5. If required additional stationary supports on the coupling plates 10 for limiting the forward rotation of the support tube 14.

As shown in figure 6, preparation of tilting the tipper body 16 the cylinder 11 retracts the support plates 15 into the support tube 14 and cylinder 9 rotates the support tubes 14 upwards so that the bumper 8 is more less in the plane of the sub frame 3 and against the tilt frame 16. Figure 7 shows the tipper body 16 in tilted position, the bumper 8 is against the tipper body 16 and there is no interference of the bumper 8 with other parts of the truck.

## Claims

1. Truck for transporting bulk loads comprising a chassis (2), a tipper body (4,16) supported by the chassis and at the end of the tipper body a tilt shaft (5) to connect the tipper body to the chassis wherein the tipper body extends with a overhang (6) rearwards of the tilt shaft and a bumper (8) at the rear of the chassis under the tipper body **characterized in that** the bumper (8) comprises a bumper frame (14,15), a hinge (12) connecting the bumper frame to the tipper body and a adjustment means for extending the distance between the bumper and the hinge.

2. Truck in accordance with claim 1 wherein the adjustment means comprises a slide.

3. Truck in accordance with claim 1 or 2 wherein the tilt shaft (5) and the hinge (12) have the same rotation axis.

4. Truck in accordance with one of the previous claims comprising a first actuator (9) coupled to the tipper body (4,16) and the bumper frame (14) for moving the bumper frame in an upper position and a lower position and a second actuator (11) coupled to the bumper (8) and the bumper frame for adjusting the distance between the bumper and the hinge (12).

5. Method for transporting a bulk load using a vehicle with a tipper body (4) and unloading the bulk load from the tipper body **characterized in that** during transport a bumper (8) that is coupled to the tipper body (4) is positioned by one or more actuators (9,11) at the rearward end of the tipper body and more or less 400 - 600 mm above the road and wherein before unloading by tilting the tipper body a first actuator (9) rotates the bumper (8) upwards against the underside of the tipper body so that it can tilt with the tipper body.

6. Method in accordance with claim 5 wherein before unloading a second actuator (11) moves the bumper (8) forwards so that the bumper is completely under the tipper body (4).
